Europäisches Patentamt

European Patent Office

Office européen des brevets

(11) Publication number: **0 277 646 B1**

# EUROPEAN PATENT SPECIFICATION

(45) Date of publication of patent specification: **08.07.92**  (51) Int. Cl.⁵: **C09K  11/66**

(21) Application number: **88101503.6**

(22) Date of filing: **02.02.88**

The file contains technical information submitted
after the application was filed and not included in
this specification

(54) **Calcium silicate phosphor of large particle size and process for producing same.**

(30) Priority: **02.02.87 US 9425**

(43) Date of publication of application:
**10.08.88 Bulletin  88/32**

(45) Publication of the grant of the patent:
**08.07.92 Bulletin  92/28**

(84) Designated Contracting States:
**DE GB NL**

(56) References cited:
**GB-A- 1 198 250**
**US-A- 3 586 635**

(73) Proprietor: **GTE PRODUCTS CORPORATION**
**1209 Orange Street**
**Wilmington Delaware 19801(US)**

(72) Inventor: **Lenox, Joseph J.**
**8 Foster Road**
**Towanda, PA 18848(US)**

(74) Representative: **Patentanwälte Grünecker,**
**Kinkeldey, Stockmair & Partner**
**Maximilianstrasse 58**
**W-8000 München 22(DE)**

Note: Within nine months from the publication of the mention of the grant of the European patent, any person
may give notice to the European Patent Office of opposition to the European patent granted. Notice of opposition
shall be filed in a written reasoned statement. It shall not be deemed to have been filed until the opposition fee
has been paid (Art. 99(1) European patent convention).

**Description**

BACKGROUND OF THE INVENTION

The manufacturing of manganese and lead activated calcium silicate phosphors for fluorescent lamp applications involves typically the wet processing of the formulated mix of components usually by milling in water for a long period of time. This wet procedure insures a satisfactory mix of raw materials and thus makes it possible to achieve on the firing and post firing steps the synthesis of a satisfactory luminescent lamp phosphor. The phosphor made by this wet manufacturing process has inherent particle morphology, particle size and size distribution characteristics. The phosphor particle size is small, the size distribution is wide and the phosphor powder is highly cohesive. For these reasons the use of the phosphor is limited to standard lamp coating procedures and to standard lamp types.

The importance of a large particle size, narrow size distribution red emitting phosphor has increased in recent years with the growing demand for high CRT performance lamps. By narrow particle size distribution is meant that there are no excessively large particles present, that is, essentially no particles greater than 32 microns or larger are present.

Therefore large particle size and narrow particle size distribution phosphors and process for producing same would be an advancement in the art.

GB-A-1 198 250 discloses a process for preparing a calcium silicate phosphor by wet mixing calcium nitrate, manganese nitrate and lead nitrate together with a crushed silica hydrogel with a specific amount of water. The slurry or mixture of solids is fed into a fluid energy mill operated at temperatures of 600 to 1500°F. In the milling step the following operations take place:

(a) dewatering in the case of slurries,
(b) dehydration of the hydrogel into the fine sized silica.

The final calcine particles are in a state of fine subdivision and have surface areas of 1-10 square meters per gramm.

US-A-3, 586, 635 discloses a process for the preparation of metal silica phosphors comprising percipitation of reactive hydrous oxide intermediate under intensive mixing conditions, followed by spray drying, washing, drying and calcination thereby yielding the desired flourescent material. The slurry of said prior art method can be satisfactorily prepared by using a device designated as a hydrous oxide reactor.

SUMMARY OF THE INVENTION

In accordance with one aspect of this invention, there is provided a calcium silicate phosphor activated with manganese and lead which has a particle size of at least 7 microns in diameter and in which there are essentially no particles greater than about 32 microns in diameter.

In accordance with another aspect of this invention, there is provided a process for producing the phosphor. The process involves forming a relatively uniform first admixture in a dry state consisting essentially of calcium carbonate, silicic acid, a manganese containing compound in an amount sufficient to result in about .02 to 0.1 moles of manganese per mole of calcium a lead containing compound in an amount sufficient to result in about .002 to .03 moles of lead per mole of calcium in the phosphor, firing this admixture at a temperature of at least about 1900°F, forming a second admixture of this first fired phosphor and a source of chloride in the dry state to result in a particle size distribution in the phosphor in which the particles greater than 32 microns in diameter are eliminated, and firing this second admixture to produce the final phosphor, which is deagglomerated.

DETAILED DESCRIPTION OF THE INVENTION

For a better understanding of the present invention, together with other and further objects, advantages and capabilities thereof, reference is made to the following disclosure and appended claims in connection with the above description of some of the aspects of the invention.

The phosphors of this invnetion are manganese and lead activated calcium silicate phosphors. They are characterized by a particular size of at least about 7 microns in diameter and preferably from about 8 to aboaut 15 microns in diameter. This particle size is the 50% size as measured by the Coulter Counter technique. The phosphors of this invention are characterized also by a narrow particle size distribution. That is, they have essentially no particles which are greater than about 32 microns in diameter.

The phosphors of this invention are made by the following described process.

A relatively uniform first admixture is formed of the components of calcium carbonate, silicic acid, a manganese containing compound and a lead containing compound. The amount of the manganese containing compound is sufficient to result in a level of from about .02 to about 0.1 moles of manganese per mole of calcium in the subsequently produced phosphor. The amount of the lead containing compound is sufficient to result in a level of from about .003 to about .02 moles of lead per mole of calcium in the subsequently produced phosphor. The preferred manganese containing compound is manganese carbonate. The preferred lead containing compound is lead fluoride. The admixture is formed in a dry state. This is critical to the practice of this invention. Mixing in a dry state insures that a coarse particle size will be obtained as opposed to mixing in the wet state in which undesirable small particle size is obtained.

This first admixture can be formed by dry mixing methods known in the art. Although it is to be understood that any dry mixing method is suitable as long as it results in a relatively uniform distribution of the components, the preferred methods are by hammermilling, vibration energy milling such as in a SWECO mill, ball milling, blending, and blending and intensifying.

The resulting first admixture is fired at a sufficient temperature for a sufficient time to form a first fired calcium silicate phosphor. The temperature and time must be sufficient to promote large crystal formation and to insure diffusion of the lead into the host crystal of calcium silicate. Suitable temperatures are at least about 1900°F with from about 1900°F to about 2250°F being preferred to accomplish this firing step. The firing times are typically about 3 hours but can be as long as about 15 hours at these temperatures.

A relatively uniform second admixture is formed of the phosphor and a source of chloride. This admixture is formed in the dry state to insure that the excessively large particles will be eliminated from the phosphor and that the phosphor will have a narrow particle size distribution, that is, there will be essentially no particles in the phosphor which are greater than about 32 microns in diameter. The elimination of these excessively large particles results in an improved particle size distribution in the phosphor for its intended use in lamps.

The purpose of the chloride is to clean the surface of the phosphor of lead which results on the phosphor in the dry blending operation. This surface lead must be removed to obtain acceptable phosphor brightness. In general, any source of chloride can be used. The amount of chloride in the second admixture is makes up typically from about 0.4% to about 3% by weight of the second admixture. The preferred source of chloride is ammonium chloride. The ammonium chloride is added in an amount sufficient to result in a level of ammonium chloride of from about 0.7% to about 4% by weight in the admixture. This amount delivers the above given levels of chloride in the second admixture.

The second admixture can be dry milled to further insure that the particle size will fall in the range of greater than about 7 microns in diameter.

The second admixture is fired at a sufficient temperature for a sufficient time to produce the final phosphor. The temperature must be sufficient to increase the crystal growth of the phosphor. This firing step results in lead chloride being formed and removed by vaporization. The firing temperature is at least about 1900°F with from about 1900°F to about 2050°F being preferred.

The resulting final phosphor is then deagglomerated. This is done by preferably by milling by standard methods.

The resulting manganese and lead activated calcium silicate phosphors of this invention have a larger particle size and a narrower particle size distribution than phosphors produced by the prior art method of wet mixing of the phosphor components. As a result of the larger particle size and narrower particle size distribution the phosphor has what is called stir in features, that is, it can be used in the application without further milling. The phosphors of this invention produce improved coating texture in the application in lamps.

To more fully illustrate this invention, the following non-limiting example is presented.

Example

The following raw materials are mixed in a V-blender with intensifier bar to form a uniform admixture:

| Material | Weight grams |
|---|---|
| $CaCO_3$ | 801 |
| $SiO_2 \cdot H_2O$ | 633 |
| $MnCO_3$ | 66.3 |
| $PbF_3$ | 12.8 |

The materials are blended and intensified for about 8 minutes, followed by hammer milling through a micropulverizer, and again reblending. The resulting admixture is then fired for about 12 hours at about 2200°F in a gas fired box furnace. After this firing, the phosphor cake is hand rolled and crushed into pieces at least about 1/4 inch in size. To this fired material is added ammonium chloride corresponding about 4.0% by weight of the phosphor. After being blended, the mix is ball milled for about 3 hours and 50 minutes, with 1/2" alumina cylinders as the grinding medium, or until there is no coarse fraction greater than about 1.2% above 32 micron particle size as determined by coulter counter measurements- sonic 100 micron aperture. This milled mix is then fired in a gas fired box furnace for about 2 hours at about 1975°F without a tray cover. Cake thickness is about 1 1/2 inches as a result of this firing. This fired material is then milled with a finely divided alumina such as ALON C in an amount equal to about 0.1% by weight of the phosphor in a 1 quart mill for about 15 minutes using 1/4" alumina cylinders to reduce or eliminate agglomerates in the phosphor powder. The data below shows particle size data for a phosphor made by the prior art wet mixing method and for a phosphor made according to the present invention.

| Method | Coulter Counter Data | | | |
|---|---|---|---|---|
| | 50% size microns | QD | % <5 microns | % > 25.4 microns |
| Wet method | 6.5 | 0.40 | 32 | 4.4 |
| Dry method (this invention) | 10.8 | 0.38 | 12.7 | 2.8 |

It can be seen that the 50% size of the phosphor of the present invention is larger than that of the prior art phosphor made by the wet method. The particle size distribution of the phosphor of the present invention is narrower that of the prior art phosphor as shown by the QD values, the % < 5 microns, and the % > 25.4 microns.

## Claims

1. A process for producing a large particle size calcium silicate phosphor activated with manganese and lead, said process comprising:

   (a) forming a relatively uniform first admixture in a dry state consisting essentially of calcium carbonate, silicic acid, a manganese containing compound, and a lead containing compound, with said manganese being supplied in an amount sufficient to result in a level of from 0.02 to 0.1 moles of manganese per mole of calcium in said phosphor and with said lead being supplied in an amount sufficient to result in a level of from 0.002 to 0.03 moles of lead per mole of calcium in said phosphor;

   (b) firing said first admixture at a temperature of at least 1038°C (1900°F) to form a first fired calcium silicate phosphor;

   (c) forming a relatively uniform second admixture consisting essentially of said first fired phosphor and a source of chloride, said admixture being formed in the dry state to result in a particle size distribution in said phosphor in which the particles having a 50% particle size of greater than about 32 microns in diameter are essentially eliminated from said phosphor;

   (d) firing said second admixture at a temperature of at least 1038°C (1900°F) to produce the final phosphor; and

   (f) deagglomerating said final phosphor, said final phosphor having a 50% particle size of at least 7 microns in diameter.

**2.** A process of claim 1 wherein said second admixture is dry milled to insure that the 50% particle size of said phosphor is at least 7 microns in diameter.

**3.** A process of claim 1 wherein the 50% particle size of said phosphor is from 8 microns to 15 microns in diameter.

**4.** A process of claim 1 wherein said first admixture is fired at a temperature of from 1038°C (1900°F) to 1232°C (2250°F).

**5.** A process of claim 1 wherein said second admixture is fired at a temperature of from 1038°C (1900°F) to 1121°C (2050°F).

**6.** A calcium silicate phosphor obtained according to claim 1 activated with manganese and lead having a 50% particle size of at least 7 microns in diameter and a particle size distribution in which there are essentially no particles greater than 32 microns in diameter.

**7.** A phosphor of claim 6 wherein the 50% particle size is from 8 microns to 15 microns in diameter.

**Revendications**

**1.** Procédé de fabrication d'un luminophore de grande taille de particules de silicate de calcium dopé au manganèse et ou plomb, le dit procédé comprenant les étapes de :

(a) formation d'un premier mélange relativement uniforme en état sec comprenant essentiellement du a carbonate de calcium, un acide silicique, un composé contenant du manganèse, et un composé contenant du plomb, le dit manganèse étant délivre en quantité suffisante pour atteindre un niveau compris entre 0.02 et 0.1 mole de manganèse par mole de calcium dans le dit luminphore, et le dit plomb étant délivré en quantité suffisante pour atteindre un niveau compris entre 0,002 et 0,03 mole de plomb par mole de calcium dans le dit luminophore:

(b) brûlage du dit premier mélange à une température supérieure ou égale à 1038° C (1900°F) pour former un premier luminphore de silicate de calcium calciné;

(c) formation d'un deuxième mélange relativement uniforme comprenant essentiellement le dit premier luminophore calciné et une source de chlorure, le dit mélange étant formé en état sec pour obtenir une distribution de tailles de particules dans le dit luminophore telle que les particules ayant une taille moitié en diamètre supérieure à environ 32 microns sont essentiellement éliminées du dit luminophore:

(d) brûlage du dit deuxième mélange à une température supérieure ou égale à 1038°C (1900°F) pour obtenir le luminophore final; et

(f) désagglomération du dit luminophore final, la taille moitié des particules dit luminophore final étant supérieure ou égale à 7 microns en diamètre.

**2.** Procédé selon la revendication 1 dans lequel le deuxième mélange est broyé à sec pour s'assurer que la taille moitié des particules dans le dit luminophore est supérieure ou égale à 7 microns en diamètre.

**3.** Procédé selon la revendication 1 dans lequel la taille moitié des particules du dit luminophore est comprise entre 8 et 15 microns en diamètre.

**4.** Procédé selon la revendication 1 dans lequel le dit premier mélange est calciné à une température comprise entre 1038°C (1900°F) et 1232°C (2250°F).

**5.** Procédé selon la revendication 1 dans lequel le dit deuxième mélange est calciné à une température comprise entre 1038°C (1900°F) et 1121°C (2050°F).

**6.** Luminophore de silicate de calcium obtenu selon le procédé de la revendication 1 et dopé au manganèse et au plomb dont le taille moitié des particules en diamètre est supérieure ou égale à 7 microns et ayant une distribution en taille des particules telle qu'il n'y a essentiellement aucune particule d'un diamètre supérieur à 32 microns.

**7.** Luminophore selon la revendication 6 dans lequel la taille moitié des particules est comprise entre 6 et 15 microns en diamètre.

**Patentansprüche**

1. Verfahren zur Herstellung von mit Mangan und Blei aktiviertem Calcium-Silikat-Phosphor von hoher Partikelgröße, dieses Verfahren unfaßt:

(a) Bilden einer relativ gleichförmigen ersten Beimengung in einem trockenen Zustand, welche im wesentlichen aus Calcium-Karbonat, Kieselsäure, einer manganhaltigen Verbindung und einer bleihaltigen Verbindung besteht, wobei dieses Mangan in einer Menge zugeführt wird, welche ausreichend ist einen Anteil von 0,02 bis 0,1 Mol Mangan pro Mol Calcium in diesem Phosphor zu bilden und wobei dieses Blei in einer Menge zugeführt wird, welche ausreichend ist einen Anteil von 0,002 bis 0,03 Mol Blei pro Mol Calcium in diesem Phosphor zu bilden;

(b) Brennen dieser ersten Beimengung bei einer Temperatur von wenigstens 1.038° C (1900° F), um ein erstes gebranntes Calcium-Silikat-Phosphor zu bilden;

(c) Bilden einer relativ gleichförmigen zweiten Beimengung, welche im wesentlichen auf diesem ersten gebrannten Phosphor und einer Chloridquelle besteht, wobei diese Beimengung in dem trockenen Zustand gebildet wird, um in einer Teilchengrößenverteilung dieses Phosphor zu resultieren, bei welcher die Teilchen mit einer 50 % Teilchengröße von mehr als ungefähr 32 Mikron im Durchmesser im wesentlichen aus diesem Phosphor beseitigt sind;

(d) Brennen dieser zweiten Beimengung bei einer Temperatur von wenigstens 1038° C (1900° F), um das Endphosphor herzustellen; und

(f) Endagglomerieren dieses Endphosphors, wobei dieses Endphosphor eine 50 % Teilchengröße von wenigstens 7 Mikron im Durchmesser aufweist.

2. Verfahren nach Anspruch 1, wobei diese zweite Beimengung trockengemahlen wird, um sicherzustellen, daß die 50 % Teilchengröße dieses Phosphors wenigstens 7 Mikron im Durchmesser beträgt.

3. Verfahren nach Anspruch 1, wobei die 50 % Teilchengröße dieses Phosphors zwischen 8 und 15 Mikron im Durchmesser beträgt.

4. Verfahren nach Anspruch 1, wobei diese Erstbeimengung bei einer Temperatur zwischen 1038° C (1900° F) bis 1232° C (2250° F) gebrannt wird.

5. Verfahren nach Anspruch 1, wobei diese zweite Beimengung bei einer Temperatur zwischen 1038° C (1900° F) bis 1121° C (2050° F) gebrannt wird.

6. Calcium-Silikat-Phosphor, gewonnen nach Anspruch 1 aktiviert mit Mangan und Blei, welches eine 50 % Teilchengröße von wenigstens 7 Mikron im Durchmesser und eine Teilchengrößenverteilung aufweist, bei welcher im wesentlichen keine Teilchen vorhanden sind, welche im Durchmesser größer als 32 Mikron sind.

7. Phosphor nach Anspruch 6, wobei die 50 % Teilchengröße zwischen 8 und 15 Mikron im Durchmesser beträgt.

6